# EUROPÄISCHE PATENTANMELDUNG

(11) **EP 1 376 781 A1**
(43) Veröffentlichungstag der Anmeldung: **02.01.2004**
(21) Anmeldenummer: 03013676.6
(22) Anmeldetag: 17.06.2003
(51) Int. Cl.: H01R 25/16

(54) **Stromschiene**

(30) Priorität: 21.06.2002 DE 10227931
(71) Anmelder: Stemmann-Technik GmbH, 48465 Schüttorf (DE)
(72) Erfinder: Barthelt, Klaus, 53501 Grafschaft 1 (DE)
(74) Vertreter: Griepenstroh, Jörg

(57) **Zusammenfassung**

Eine Stromschiene (1) als Bestandteil eines Strom- und Daten übertragenden Systems besitzt in ihrer Längserstreckung in Form mindestens eines Leiters (2, 3) in Abstand zueinander angeordnete biegesteife Anschlussabschnitte (7, 8) und zwischen den Anschlussabschnitten vorgesehene raumflexibler Verbindungsabschnitte (9, 10). Die Verbindungsabschnitte (9, 10) sind schlangenlinienartig konfiguriert und in einer kanalartigen Umhüllung (11, 12) relativ beweglich geführt und von einem Isoliermantel (4) umgeben.

## Beschreibung

Die Erfindung betrifft eine Stromschiene als Bestandteil eines Strom- und Daten übertragenden Systems.

In der Kraftfahrzeugindustrie werden große Anstrengungen gemacht, das Gewicht eines Kraftfahrzeugs soweit wie möglich zu reduzieren, um auf diese Weise möglichst niedrige Verbrauchswerte zu erzielen. Gleichzeitig werden mehr und mehr elektrische Verbraucher und Sensoren in modernen Kraftfahrzeugen installiert, so dass das Fahrzeuggewicht nicht nur durch die Sensoren selbst, sondern auch durch die erforderliche Verkabelung zunimmt.

Es ist bekannt, z.B. im Rahmen von Bordnetzwerken Strom und Daten über gemeinsame Leiter zu übertragen. Abnehmer, beispielsweise im Heck des Kraftfahrzeugs könnten beispielsweise über einen zentralen Leiter sowohl mit Strom versorgt werden als auch mit den notwendigen Steuerungsdaten.

Während diese Technologie in Laborversuchen problemlos funktioniert, ist die praktische Umsetzung mit bekannten Stromschienen problematisch. Um alle Verbraucher an eine, zentral durch ein Kraftfahrzeug geführte Stromschiene anschließen zu können, muss der Querschnitt des metallischen Leiters sehr groß sein. Unter Umständen sind Leitungsquerschnitte von 18 mm² erforderlich. Ein solcher 2-Leiter ist jedoch aufgrund seiner Biegesteifigkeit nur schwer an die Struktur eines Kraftfahrzeugs anzupassen.

Hiervon ausgehend liegt der Erfindung die Aufgabe zugrunde, eine Stromschiene als Bestandteil eines Strom- und Daten übertragenden Systems bereit zu stellen, welche räumlich leicht zu biegen und einfach in der Herstellung ist sowie eine einfache und kostengünstige Anbindung von Abnehmern ermöglicht.

Die Erfindung löst diese Aufgabe durch eine Stromschiene mit den Merkmalen des Patentanspruchs 1.

Die erfindungsgemäße Stromschiene zeichnet sich dadurch aus, dass sie in ihrer Längserstreckung in Form mindestens eines Leiters im Abstand zueinander angeordnete biegesteife Anschlussabschnitte und zwischen den Anschlussabschnitten vorgesehene raumflexible Verbindungsabschnitte besitzt.

Bei einer derartig konfigurierten Stromschiene als Bestandteil eines Strom- und Daten übertragenden Systems erfolgt eine funktionale Trennung zwischen Anschlussabschnitten und Verbindungsabschnitten. Durch die in ihrer Längserstreckung unterschiedliche Konfiguration kann eine derartig konfigurierte Stromschiene individuell auf einen Fahrzeugtyp abgestimmt sein, wobei die Anschlussabschnitte nur in denjenigen Bereichen vorgesehen sind, in denen tatsächlich ein Abgriff von Strom und/oder Daten erfolgt.

Selbstverständlich können bei vorkonfektionierten Stromschienen die Anschlussabschnitte in regelmäßigen, gleichbleibenden Abständen ausgebildet sein. Zweckmäßig ist es jedoch, die Anschlussabschnitte in differenten Abständen vorzusehen, so dass eine maximale Raumflexibilität und damit optimale Anpassbarkeit einer Stromschiene, insbesondere an die Karosserie eines Kraftfahrzeugs möglich ist.

Als vorteilhaft wird es ferner angesehen, wenn die Verbindungsabschnitte schlangenlinienartig konfiguriert sind (Patentanspruch 2). Durch die Ausbildung von Schlangenlinien ist selbst aus einem elektrisch leitenden Vollmaterial hergestellter Verbindungsabschnitt extrem flexibel. Die Vorteile dieser Ausgestaltung kommen insbesondere dann zum Tragen, wenn die Stromschiene mehr als einen Leiter umfasst. Die schlangenlinienartige Konfiguration ermöglicht einen Längenausgleich der parallel zueinander geführten Leiter im Bereich von Biegungen der Stromschiene, so dass Rückstellkräfte und innere Spannungen bei der erfindungsgemäßen Stromschiene nicht auftreten. Vielmehr behält die erfindungsgemäße Stromschiene, anders als beispielsweise verdrillte Leiter die ihr zugedachte räumliche Position bei. Dies bringt wiederum Vorteile bei der Eingliederung der Stromschiene in ein Kraftfahrzeug mit sich, da an den Verbindungsgliedern zwischen Stromschiene und Kraftfahrzeug geringere Kräfte wirken und diese daher in größeren Abständen montiert werden können.

Nach den Merkmalen des Patentanspruchs 3 ist vorgesehen, dass die Stromschiene ein erstes Schienenband und ein dazu parallel geführtes zweites Schienenband umfasst. Die Schienenbänder sind dabei im Bereich der Anschlussabschnitte fest miteinander verbunden. Ein solches Paar von Schienenbändern bildet jeweils einen Leiter, so dass die Anschlussabschnitte sowohl mechanisch als auch elektrisch fest miteinander verbunden sind. Dies kann beispielsweise durch eine Punktschweißung erfolgen.

Wesentlich ist, dass der Verlauf der Schlangenlinien der Verbindungsabschnitte des ersten Schienenbands gegenläufig zu dem Verlauf der Schlangenlinien der Verbindungsabschnitte des zweiten Schienenbands ist. Gegenläufig im Sinne der Erfindung bedeutet, dass die gleichmäßig konfigurierten Schlangenlinien um das Winkelmaß 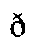 phasenverschoben angeordnet sind. Hierdurch wird erreicht, dass die neutrale Phase der Verbindungsabschnitte mittig zwischen den Anschlussabschnitten verläuft und eine optimale Biegbarkeit der Stromschiene gegeben ist.

Die Schienenbänder selbst können identisch konfiguriert sein (Patentanspruch 4). Um eine Gegenläufigkeit der Schlangenlinien zu erzielen, reicht es aus, das zweite Schienenband um 180° um seine Längsachse gedreht, an dem ersten Schienenband zu befestigen. Hierdurch ist die Teileanzahl zur Fertigung einer Stromschiene auf ein Minimum reduziert.

Grundsätzlich ist es möglich, dass die Verbindungsabschnitte und die Anschlussabschnitte eines Schienenbandes durch einen separaten Fertigungsschritt miteinander verbunden sind. Besonders günstig lassen sich die erfindungsgemäßen Schienenbänder aus einem flachen Bandmaterial herstellen, das im Bereich der Verbindungsabschnitte zur Schlangenlinienform ausgestanzt ist. Auf diese Weise ist es möglich, die Anschlussabschnitte und die Verbindungsabschnitte einstückig aus einem elektrisch leitenden Vollmaterial in einem einzigen Arbeitsschritt herzustellen (Patentanspruch 5).

Zur Gewährleistung der Relativbewegungen der Schlangenlinien ist es nach den Merkmalen des Patentanspruchs 6 vorgesehen, dass die Verbindungsabschnitte eines Leiters insgesamt in einer kanalartigen Umhüllung relativ beweglich geführt sind. Die relative Beweglichkeit bezieht sich dabei sowohl auf die Bewegung des Verbindungsabschnitts gegenüber der Umhüllung als auch auf die gegenseitige Bewegung der Schienenbänder zueinander. Dieser Aspekt ist wichtig, da vorgesehen ist, dass die Verbindungsabschnitte zusammen mit den Anschlussabschnitten in einen flexiblen Isoliermantel eingebettet sind. Hierbei muss verhindert werden, dass bei einem Umspritzen der Anschlussabschnitte und der Verbindungsabschnitte Isoliermaterial in die Zwischenräume zwischen den Schlangenlinien gelangt, da hierdurch eine Relativbewegung beschränkt werden könnte. Die Umhüllung des Verbindungsabschnittes schirmt diesen von dem Eintritt des Isoliermaterials ab, so dass auch bei einer vollständigen Ummantelung eine beständige Raumflexibilität gegeben ist.

Vorteilhaft enthält die Umhüllung Polytetrafluorethylen (PTFE), das sich durch besonders niedrige Reibwerte auszeichnet und somit zur Verbesserung der Biegbarkeit der Verbindungsabschnitte beiträgt.

Schließlich ist nach den Merkmalen des Patentanspruchs 8 beabsichtigt, an den Isoliermantel Halterungen einstückig anzuformen. Dies können beispielsweise im Abstand zueinander angeordnete Laschen sein, über welche die Stromschiene z.B. mit der Karosserie eines Kraftfahrzeugs verbindbar ist.

Die Anbindung von Sensoren und/oder Aktoren, sowie allgemein von Verbrauchern an die Anschlussabschnitte der Stromschiene kann durch Schneidverbinder erfolgen, bei welchen der Kontakt zu den Schienenbändern über den Isoliermantel durchsetzende Metallklingen hergestellt ist. Auch bei zwei im Abstand zueinander geführten Leitern ist eine gezielte Kontaktierung der Schienenbänder möglich, da diese im Bereich der Anschlussabschnitte eine definierte Lage besitzen. Eine farbliche Kennzeichnung des Isoliermantels im Bereich der Anschlussabschnitte ist von Vorteil, damit ohne weitergehende Manipulation des Isoliermantels der zu kontaktierende Leiter leicht auffindbar ist.

Die Erfindung wird nachfolgend anhand eines in Zeichnungen dargestellten Ausführungsbeispiels erläutert. Es zeigen:
- Figur 1: Ein Teilstück einer perspektivisch dargestellten Stromschiene im Querschnitt und
- Figur 2: Schienenbänder zur Verwendung in der Stromschiene der Figur 1.

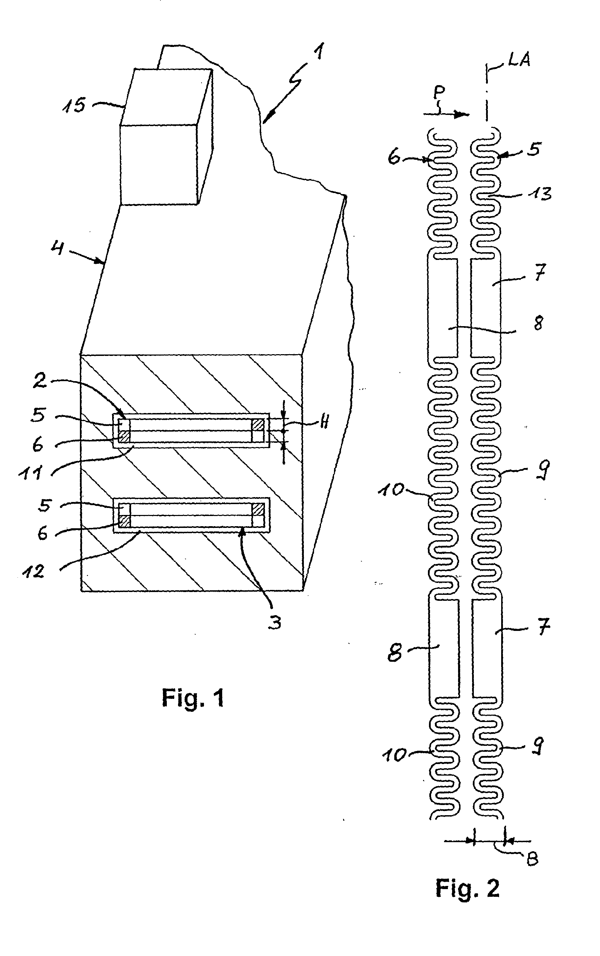

Figur 1 zeigt eine Stromschiene 1 als Bestandteil eines nicht näher dargestellten Strom- und Daten übertragenden Systems. Die Stromschiene 1 umfasst in diesem Ausführungsbeispiel einen ersten Leiter 2 und einen zweiten Leiter 3, die im parallelen Abstand zueinander in einen Isoliermantel 4 eingebettet sind. Jeder Leiter 2, 3 ist rechteckig konfiguriert und besteht aus jeweils einem ersten Schienenband 5 und einem zweiten Schienenband 6. Die Schienenbänder 5, 6 sind ohne den Isoliermantel 4 in der Draufsicht in Figur 2 dargestellt.

Die identisch konfigurierten Schienenbänder 5, 6 sind aus einem flachen Metallband hergestellt. Die Schienenbänder 5, 6 umfassen Anschlussabschnitte 7, 8 und sich zwischen den Anschlussabschnitten 7, 8 erstreckende raumflexible Verbindungsabschnitte 9, 10. Während die Anschlussabschnitte 7, 8 rechteckig konfiguriert sind, entsprechend der Form und dem Querschnitt des bandförmigen Ausgangsmaterials, sind die Verbindungsabschnitte 9, 10 schlangenlinienartig konfiguriert, wobei die Schlangenlinien so bemessen sind, dass sich ihr in Figur 1 gezeigter quadratischer Querschnitt ergibt. Die Schnittebene der Figur 1 liegt in einem Verbindungsabschnitt 9, 10 der Stromschiene.

Die Schienenbänder 5, 6 sind exakt gleich konfiguriert, wobei in der Darstellung der Figur 2 das Schienenband 6 in einer Position gezeigt ist, die einer Spiegelung des ersten Schienenband 5 um seine Längsachse LA entspricht. In der Einbaulage wird dieses, um 180° um die Längsachse LA gedrehte Schienenband 6 in Richtung des Pfeils P verlagert und auf dem ersten Schienenband 5 positioniert, wobei die Anschlussabschnitte 7, 8 und die Verbindungsabschnitte 9, 10 übereinander zur Deckung gelangen. Hierdurch ist der Verlauf der Schlangenlinien im Bereich der Verbindungsabschnitte 9, 10 gegenläufig. Der auf diese Weise hergestellte Leiter besitzt dadurch nicht die doppelte Breite B eines Schienenbands 5, 6, sondern lediglich die einfache Breite B bei doppelter Höhe H.

Während die Anschlussabschnitte 7, 8 durch ihre massive Ausgestaltung biegesteif sind, besitzen die Verbindungsabschnitte 9, 10 eine hohe Raumflexibilität, wobei ihre neutrale Faser jeweils in der Mitte eines Leiters 2, 3 in Richtung der Längsachse LA verläuft. Durch den Verlauf der neutralen Faser können die einzelnen Leiter 2, 3 ohne Probleme einem gewünschten Verlauf der Stromschiene 1 folgen, ohne dass der erste Leiter 2 oder zweite Leiter 3 im Biegeradius durch unterschiedliche Längen Verwerfungen der Stromschiene 1 hervorrufen.

Damit die Relativbeweglichkeit der Verbindungsabschnitte 9, 10 gegenüber dem Isoliermantel 4 gewährleistet ist, sind die Verbindungsabschnitte 9, 10 von einer kanalartigen Umhüllung 11, 12 umgeben, in welcher die Schienenbänder 5, 6 relativ beweglich geführt sind. Die Umhüllung 11, 12 verhindert gleichzeitig beim Umspritzen der Leiter 2, 3, dass Material des Isoliermantels 4 in die Zwischenräume 13 der Schlangenlinien dringt und hierdurch die Relativbeweglichkeit der Verbindungsabschnitte 9, 10 behindert. Der Isoliermantel 4 kann hierzu aus einem Polytetrafluorethylen (PTFE) enthaltenen Material hergestellt sein. Insbesondere ist die kanalartige Umhüllung durch ein Umwickeln wenigstens der Verbindungsabschnitte 9, 10 mit einem PTFE-Band hergestellt. Sein niedriger Reibungskoeffizient ermöglicht eine leichte Relativbeweglichkeit der Schienenbänder 5, 6 innerhalb der Umhüllung 11, 12 und damit eine leichte Biegbarkeit der Stromschiene 1.

Der Isoliermantel 4 ist in dem in Figur 1 dargestellten Ausführungsbeispiel rechteckig konfiguriert, wobei an seiner Oberseite 14 eine Halterung 15 einstückig angeformt ist. Weitere, nicht näher dargestellte Halterungen sind in Längserstreckung im Abstand zueinander an dem Isoliermantel 4 vorgesehen.

### Bezugszeichenaufstellung

- 1 -: Stromschiene
- 2 -: erster Leiter
- 3 -: zweiter Leiter
- 4 -: Isoliermantel
- 5 -: erstes Schienenband
- 6 -: zweites Schienenband
- 7 -: Anschlussabschnitt
- 8 -: Anschlussabschnitt
- 9 -: Verbindungsabschnitt
- 10 -: Verbindungsabschnitt
- 11 -: Umhüllung
- 12 -: Umhüllung
- 13 -: Zwischenraum
- 14 -: Oberseite v. 4
- 15 -: Halterung an 4

- B -: Breite v. 2, 3
- H -: Höhe v. 2, 3
- LA -: Längsachse

## Patentansprüche

1. Stromschiene als Bestandteil eines Strom und Daten übertragenden Systems, welche in ihrer Längserstreckung in Form mindestens eines Leiters ( 2, 3 ) im Abstand zueinander angeordnete biegesteife Anschlussabschnitte ( 7, 8 ) und zwischen den Anschlussabschnitten ( 7, 8 ) vorgesehene raumflexible Verbindungsabschnitte ( 9, 10) besitzt.

2. Stromschiene nach Anspruch 1, bei welcher die Verbindungsabschnitte ( 9, 10 ) schlangenlinienartig konfiguriert sind.

3. Stromschiene nach Anspruch 2, welche ein erstes Schienenband ( 5 ) und ein dazu parallel geführtes zweites Schienenband ( 6 ) umfasst, welche in Bereichen der Anschlussabschnitte ( 7, 8 ) fest miteinander verbunden sind, wobei der Verlauf der Schlangenlinien der Verbindungsabschnitte ( 9 ) des ersten Schienenbands ( 5 ) gegenläufig zu dem Verlauf der Schlangenlinien der Verbindungsabschnitte ( 10 ) des zweiten Schienenbands ( 6 ) ist.

4. Stromschiene nach Anspruch 3, **dadurch gekennzeichnet, dass** die Schienenbänder ( 5, 6 ) identisch konfiguriert sind und das zweite Schienenband ( 6 ) um 180° um seine Längsache ( LA ) gedreht an dem ersten Schienenband ( 5) befestigt ist.

5. Stromschiene nach einem der Ansprüche 1 bis 4, **dadurch gekennzeichnet, dass** die Anschlussabschnitte ( 7, 8 ) und die Verbindungsabschnitte ( 9, 10 ) einstückig aus einem elektrisch leitenden Vollmaterial hergestellt sind.

6. Stromschiene nach einem der Ansprüche 1 bis 5, **dadurch gekennzeichnet, dass** die Verbindungsabschnitte ( 9, 10 ) eines Leiters ( 2, 3 ) insgesamt in einer kanalartigen Umhüllung (11, 12 ) relativ beweglich geführt sind, wobei die Verbindungsabschnitte ( 9, 10 ) zusammen mit den Anschlussabschnitten ( 7, 8 ) in einen flexiblen Isoliermantel ( 4 ) eingebettet sind.

7. Stromschiene nach Anspruch 6, **dadurch gekennzeichnet, dass** die Umhüllung ( 11, 12 ) Polytetrafluorethylen (PTFE) enthält.

8. Stromschiene nach Anspruch 6 oder 7, **dadurch gekennzeichnet, dass** an den Isoliermantel ( 4 ) Halterungen ( 15 ) einstückig angeformt sind.
